# EUROPÄISCHE PATENTSCHRIFT

(11) **EP 0 410 089 B1**
(45) Veröffentlichungstag und Bekanntmachung des Hinweises auf die Patenterteilung: **30.03.1994**
(21) Anmeldenummer: 90108789.0
(22) Anmeldetag: 10.05.1990
(51) Int. Cl.: F01N 7/08, F16L 51/02

(54) **Flexibles Leitungselement für Abgasleitungen von Verbrennungsmotoren bei Kraftfahrzeugen**
Flexible pipe component for exhaust conduits of internal combustion engines used on vehicles
Elément de conduite flexible pour tuyaux d'échappement de moteurs de véhicules à combustion interne

(30) Priorität: 26.07.1989 DE 3924697
(43) Veröffentlichungstag der Anmeldung: 30.01.1991
(73) Patentinhaber: Witzenmann GmbH Metallschlauch-Fabrik Pforzheim, D-75175 Pforzheim (DE)
(72) Erfinder: Schüttler, Peter, D-7532 Niefern-Öschelbronn 2 (DE); Weinbrecht, Wolfgang, Dipl.-Ing., D-7530 Pforzheim (DE)
(74) Vertreter: Lemcke, Rupert, Dipl.-Ing.

(56) Entgegenhaltungen:
- DE-A- 3 702 243
- DE-A- 3 708 415
- FR-A- 2 545 907
- US-A- 2 444 988
- PATENT ABSTRACTS OF JAPAN vol. 8, no. 274 (M-345)(1711) 14 Dezember 1984,& JP-A-59 145321 (TOYOTA) 20 August 1984

## Beschreibung

Die Erfindung betrifft ein flexibles Leitungselement für Abgasleitungen von Verbrennungsmotoren bei Kraftfahrzeugen mit einem schraubengangförmig oder ringgewellten Balg aus Metall und einem koaxial in diesem angeordneten, ohne Dichtungseinlage gewickelten Metallschlauch, dessen Außenquerschnitt kleiner als der lichte Innenquerschnitt des Balges ist, wobei Balg und Schlauch an ihren jeweils gemeinsamen Enden zu einer Anschlußverbindung für eine weitergehende Rohrleitung vereinigt sind.

Ein derartiges Leitungselement ist beispielshalber durch die DE-A-37 08 415 bekannt. Es wird in der Regel als Zwischenstück in die im übrigen starre Abgasleitung eingebaut, um Bewegungen und Schwingungen aufzunehmen und von der Weiterleitung an benachbarte Bauteile abzukoppeln, wie sie durch die elastische Lagerung der Antriebsmaschine, Erschütterungen des Fahrzeuges, temperaturänderungsbedingte Längenänderungen etc. entstehen. Dabei gilt neben der Eigenschaft der Flexibilität die Aufmerksamkeit der Frage der Wärmedämmung, der Schallabsorbtion und der Dichtheit gegen Austritt von Abgasen, insbesondere in Verbindung mit Katalysatorfahrzeugen und verschärften Bestimmungen hinsichtlich Schall- und Abgasemission.

Bei den bekannten Leitungselementen ist es nun so, daß mit den beiden Enden des Balges im wesentlichen zylindrische Anschlußstücke in Form von Hülsen oder Stutzen gasdicht durch Schweißen verbunden sind, in deren dem Balg abgewandten freien Ende das jeweilige Ende des Metallschlauches durch Schweißen festgelegt ist. Diese Konstruktion führt zu je einer Schweißnaht an den beiden Balgenden zu deren Verbindung mit den Anschlußstücken sowie einer weiteren Schweißnaht an jedem Ende des Metallschlauches zu dessen Verbindung mit dem jeweiligen Anschlußstück, wobei außerdem die Notwendigkeit der Anschlußstücke als solche auftritt. Damit ist insgesamt die bekannte Konstruktion aufwendig, in der Herstellung teuer und mit zahlreichen Einzelteilen zur Schaffung der Anschlußverbindung behaftet.

Aufgabe der Erfindung ist es daher, ein Leitungselement der eingangs genannten Art einfacher und fertigungsgünstiger zu gestalten, damit dessen Gestehungskosten herabzusetzen und auch die Lebensdauer im Betrieb zu erhöhen.

Diese Aufgabe ist erfindungsgemäß dadurch gelöst, daß der Balg mit einstückig mit ihm verbundenen zylindrischen Balganschlußenden versehen ist, deren Innendurchmesser kleiner als der lichte Innenquerschnitt des Balges ist und daß der mit seinem Außenquerschnitt im wesentlichen dem Innenquerschnitt der Balganschlußenden entsprechende Metallschlauch an seinen innerhalb der Balganschlußenden gelegenen und mit diesen bündig abschließenden Endstücken unter Zusammendrücken des Schlauchprofils und Ausgleich der Toleranzen gegenüber dem Innenquerschnitt der ßalganschlußenden radial aufgeweitet ist. Dabei ist es vorteilhaft, daß auf die Balganschlußenden je ein zylindrisches Stützteil von außen aufgesetzt, mit dem zugeordneten Balganschlußende sowie Endstück des Metallschlauches radial verpreßt und mit Balganschlußende über den Umfang mehrfach durch Anheften verbunden ist.

Durch DE-A 37 02 243 ist bereits ein flexibles Leitungselement für Abgasleitungen von Verbrennungsmotoren bei Kraftfahrzeugen bekannt mit unter anderem einer solchen Bauform, bei der zwei aus einem Metallband gewickelte Agraffschläuche mit zwischen ihnen angeordneter Isolierlage ineinander angeordnet sind, wobei die gemeinsamen Enden der Agraffschläuche derart miteinander verpreßt sind, daß der innerer Agraffschlauch endständig seinen Ausendurchmesser praktisch beibehält, wodurch sich dann für den äußeren Agraffschlauch eine solche endständige Ausbildung ergibt, mit der der Innendurchmesser des Anschlußendes des äußeren Agraffschlauches kleiner als der lichte Innenquerschnitt dieses Agraffschlauches im übrigen ist. Bei diesem Leitungselement anderer Gattung ist jedoch eine absolut dichte Ausbildung nicht möglich selbst dann, wenn der äußere Agraffschlauch unter Hinzufügung einer Dichtung hergestellt ist. Andererseits kann man im bekannten Falle das Ende des äußeren Agraffschlauches beim Verpressen im Durchmesser reduzieren, ohne daß dadurch der Agraffschlauch im übrigen seiner Funktionsfähigkeit verliert. Das ist jedoch bei einem Balg unmöglich, denn dieser ist ein äußerst dünnwandiges Teil, das bei einer sochen endständigen Durchmesserreduzierung durch das Verpressen bei der Endmontage schaden nehmen würde durch Faltenbildung oder Materialrisse. Daher sind die bekannten Maßnahmen bei einem Leitungselement der erfindungsgemäßen Gattung nicht anwendbar.

Durch die Erfindung ist grundsätzlich die Notwendigkeit von Anschlußstücken in Form von Hülsen oder Stutzen, wie sie im bekannten Falle gegeben war, beseitigt. Vielmehr sitzen nun die Enden des Balges einerseits und des Metallschlauches andererseits im Ergebnis spielfrei bündig ineinander und sind radial zu einem Verbund gepreßt, der stirnseits eine genügend massive bzw. dichte Abschlußkante bildet, um ohne Probleme an dieser Stirnseite mit dem jeweils weiterführenden Leitungsrohr verschweißt zu werden. Dabei kann dieses Ergebnis durch das ggf. vorhandene Stützteil weiter verbessert werden.

Die an sich nicht übliche und damit auch noch nicht bekannte Ausbildung des Balges mit Anschlußenden, deren Innendurchmesser kleiner als der lichte Innenquerschnitt des Balges ist, gibt dabei die Möglichkeit, den Metallschlauch mit einem Außendurchmesser zu fertigen bzw. vorzusehen, der in eingebautem Zustand keine Berührung mit den Innenkrempen der Wellen des Metallbalges hat, so daß hier verschleißbringende Berührungen bzw. gegenseitige Scheuerbewegungen nicht in Frage kommen bzw. auftreten können.

Andererseits liefert die an den Enden erfolgte radiale Aufweitung des Metallschlauches die Möglichkeit des spiel freien Sitzes der Metallschlauchenden innerhalb der Balganschlußenden. Dabei ist diese radial Aufweitung des Metallschlauches nicht größer als das Maß, um das sich der Metallschlauch beim Zusammenquetschen seiner Profilierung bezügich der Gesamtwandstärke verkleinern läßt einschließlich der Überwindung der geringen Toleranz zwischen Außendurchmesser des Metallschlauches und Innendurchmesser der Balganschlußenden, die erforderlich ist, um den Metallschlauch bei der Fertigung problemlos in den Balg einsetzen zu können.

Die Tatsache, daß der Balg im erfindungsgemäßen Falle einstückig, das heißt nahtlos in die aus seinem Material gebildeten Balganschlußenden übergeht, führt dazu, daß an den beiden Enden keine durch eine Schweißnaht oder dergleichen bedingten Spannungszonen auftreten können. Vielmehr ist die als flexibles Teil zur Verfügung stehende Länge des Balges auf ein Maximum gesteigert, wobei die Ausbildung der beiden Anschlußenden aus dem an sich dünnwandigen Balgmaterial auch dazu führt, daß das aus Metall schlauch, Balganschlußenden und ggf. Stützteilen gebildete Abschlußende des erfindungsgemäßen Leitungselementes hinsichtlich seiner insgesamten radialen Wandstärke vergleichsweise dünnwandig ausgebildet ist.

Dadurch, daß die Enden des Metallschlauches in den Balganschlußenden durch radiale Aufweitung festgelegt sind, erübrigen sich Distanzringe zwischen den Ende des Metallschlauches und den Balganschlußenden, wie Sie normalerweise zur Überwindung der erwähnten Toleranz zwischen diesen beiden Teilen erforderlich wäre.

Durch die radiale Aufweitung der Metallschlauchenden innerhalb der Balganschlußenden ergibt sich außerdem am Ende der jeweiligen radialen Aufweitung ein umlaufender Anschlag im inneren des Metallschlauches, der als Einsteckgrenze für eine weiterführende Rohrleitung gerade auch bei einer automatischen oder automatisierten Fertigung dienen kann, wobei dann auf diesem jeweils eingesteckten Rohr die Stirnkante des erfindungsgemäßen Leitungselementes festgeschweißt werden kann.

Was die Ausbildung des auf den Balganschlußenden aufgesetzten Stützteiles betrifft, so kann dies ein an mehreren Stellen beispielsweise durch Punktschweißen festgelegtes Band sein. Zweckmäßig erscheint es jedoch, das Stützteil als zylindrischen Stützring auszubilden, der sich durch geeignete Werkzeuge beim Verpressen des Anschlußendes im Durchmesser reduzieren läßt. Anschließend kann dann beispielsweise durch Punktschweißen eine Arretierung auf den Balganschlußenden stattfinden, damit der Stützring nicht bei der weiteren Handhabung unbeabsichtigt abrutschen und verloren werden kann.

Was die radiale Verpressung zwischen Balganschlußende, Endstück des Metallschlauches und Stützteil betrifft, so kann bei dieser, wie bereits angedeutet, zusätzlich eine radiale Querschnittsverminderung des Stützteiles vorgenommen sein. Gleichermaßen ist es aber selbstverständlich auch möglich, mit der Formänderung des Stützteiles oder auch überhaupt für das Verpressen nur eine Aufweitung der Metallschlauchenden in der erfindungsgemäßen Weise vorzunehmen. Dabei erscheint nur wesentlich, daß nach Möglichkeit an dem Querschnitt der Balganschlußenden keine größeren Anderungen vorgenommen werden, da der Balg üblicherweise aus dünnwandigem Material hergestellt ist und dementsprechend die Balganschlußenden auch von der zur Verfügung stehenden Materialmenge nicht besonders für nennenswerte Querschnittsänderungen geeignet sind.

Als Vorteilhafte Weiterbildung des Erfingungsgegenstandes hat sich eine Bauform erwiesen, die dadurch charakterisiert ist, daß die Endstücke des Metallschlauches bezüglich deren radiale Aufweitung bei axial gestauchtem Zustand des Metallschlauches vor dessen Einsetzen in den Balg vorgepreßt sind. Diese Bauform führt zu einer besonders kompakten und stabilen Ausbildung der Metallschlauchenden, die somit auch hinsichtlich der Anbringung der Schweißverbindung gegenüber einer weiterführenden Rohrleitung eine besondere Tragfunktion übernehmen können, wobei gleichzeitig eine gute Abstützwirkung für die Balganschlußenden gegenüber dem von außen aufgesetzten Stützteil gegeben ist, also bei dem Verpressen der Enden des erfindungsgemäßen Leitungselemente sehr kompakte und damit definierbare Verhältnisse vorliegen.

Wie bereits gesagt, kann die erwähnte Aufweitung der Metallschlauchenden bei gestauchtem Zustand des Metallschlauches vor dem Einsetzen in den Balg stattfinden. Selbstverständlich ist es aber auch denkbar, beispielsweise den Metallschlauch in den Balg einzusetzen und dann den Metallschlauch zusammen mit dem Balg axial zusammenzudrücken, um schließlich an den jeweils ineinandersteckenden Enden die Querschnittsänderungen sowie das Zusammenpressen des Metallschlauchquerschnittes und schließlich das Aufpressen des Stützteiles vorzunehmen. Die in diesem Zusammenhang als erstes erwähnte Lösungsmöglichkeit einer Vorfertigung des Metallschlauches erscheint jedoch im Augenblick zweckmäßiger. Dabei kann, und das gilt generell für alle erfindungsgemäßen Bauformen, für den Metallschlauch eine Länge vorgesehen sein, die ihm im endgültig eingebauten Zustand eine solche zusammengeschobene Anordnung verleiht, daß er eine gewünschte Schwingungsdämpfung bewirkt und/oder die axiale Verkürzung des insgesamten Leitungselementes durch dabei eintretende Blocklage des Metallschlauches begrenzt.

Als vorteilhaft hat es sich erwiesen, daß die verpreßten bzw. vorverpreßten Endstücke des Metallschlauches eine größere axiale Länge als die Balganschlußenden aufweisen, weil dadurch der Balg im Übergangsbereich zwischen Balgenden und Balganschlußenden besonders geschont wird.

Was diesen Übergangsbereich des Balges zu den Balganschlußenden betrifft, so erscheint es vorteilhaft, daß dieser Übergang in einer zwischen Außendurchmesser des Balges und lnnendurchmesser der Balganschlußenden abgestuften Form ausgebildet ist. Dabei kann der Übergang eine im Außendurchmesser reduzierte, endständige Balgwelle aufweisen. Es besteht jedoch auch die Möglichkeit, daß der Übergang ausgehend von der endständigen Balgwelle, die eventuell im Außendurchmesser reduziert ist, eine in Radialrichtung stufenförmige abgesetzte Ausbildung der Balganschlußenden aufweist.

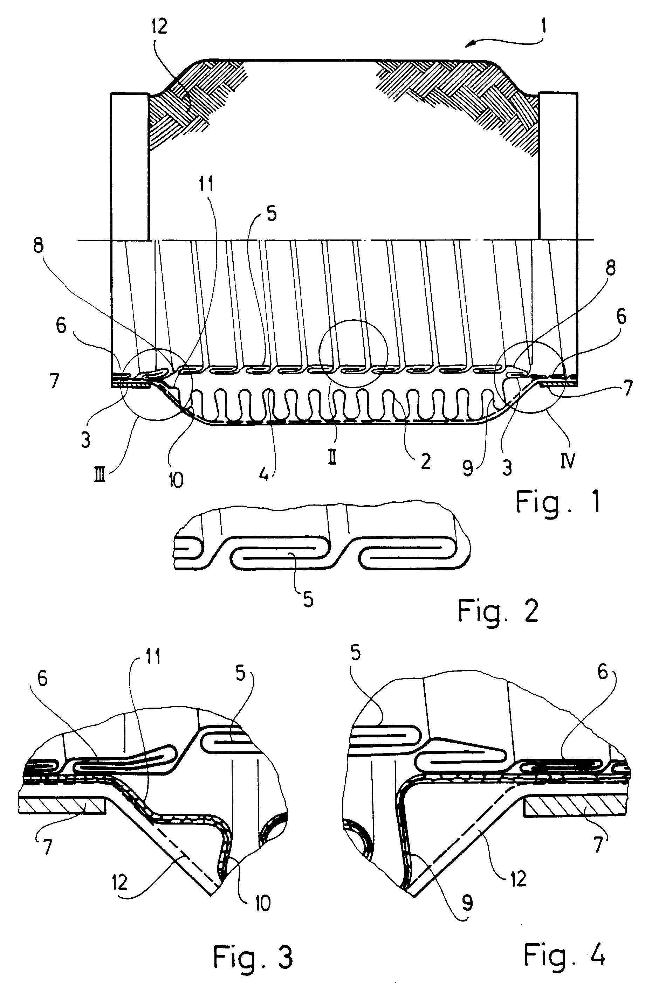

Weitere Merkmale und Einzelheiten der Erfindung ergeben sich aus der nachfolgenden Beschreibung einer Ausführungsform anhand der Zeichnung, die in Fig. 1 ein erfindungsgemäßes Leitungselement in Seitenansicht, zur Hälfte axial geschnitten, und in den Fig. 2 bis 4 die vergrößerten Einzelansichten II bis IV gemäß Fig. 1 zeigt.

Wie aus der Zeichnung ersichtlich, besteht das insgesamt mit 1 bezeichnete Leitungselement aus einem schrauben- oder ringförmig gewellten Metallbalg 2 mit zylindrischen Balganschlußenden 3, deren Innendurchmesser kleiner als der Innendurchmesser der nach innen ragenden Balgwellen 4 ist.

In den Balg 2 ist ein schraubengangförmig gewikkelter Metallschlauch, beispielsweise ein Agraffschlauch 5 eingesetzt, dessen Außendurchmesser kleiner als der Innendurchmesser der Balganschlußenden 3 ist.

An den gemeinsamen Enden sind die Balganschlußenden 3 und die Endstücke 6 des Metallschlauches 5 in Radialrichtung miteinander verpreßt, indem die Endstücke 6 unter Zusammendrücken des Wickel profiles des Metallschlauches 5 radial aufgeweitet sind, wobei gleichzeitig ein eventuelles Radialspiel des Metallschlauches 5 gegenüber dem Balganschlußenden 3 überbrückt wird. Gleichzeitig sind von außen auf die Balganschlußenden 3 gesetzte Stützteile in Form von Stützringen 7 radial im Querschnitt verringert, so daß sich insgesamt im Ergebnis aus Endstücken 6, Balganschlußenden 3 und Stützringen 7 ein fest zusammengedrückter Abschlußverbund ergibt, der zum Anschweißen an eine weiterführende Rohrleitung eine genügend massive und dichte Stirnkante bietet.

Durch die radiale Aufweitung der Endstücke 6 des Metallschlauches 5 ist gleichzeitig ein "Anschlag" 8 gebildet, der den Weg bestimmen kann, über den sich eine anschließende, hier nicht dargestellte Rohrleitung in das Leitungselement einstecken läßt. Damit ist gerade im Hinblick auf eine Serienfertigung eine besonders maßhaltige Weiterverarbeitung durch Verbindung mit anschließenden Leitungselementen sichergestellt.

Wie ferner aus der Zeichnung ersichtlich ist, geht der Balg 2 am rechten Ende über eine im Außendurchmesser reduzierte, endständige Balgwelle 9 in das Balganschlußende 3 über, womit ein besonders großer Querschnittssprung und die damit einhergehenden Belastungen vermieden sind.

Den gleichen Zweck dient es, wenn auf der linken Seite der zeichnerischen Darstellung eine ebenfalls im äußeren Durchmesser reduzierte, endständige Balgwelle 10 über eine in Radialrichtung stufenförmig abgesetzte Querschnittsform 11 in das Balganschlußende 3 übergeht.

Wie aus der Zeichnung ersichtlich, ist der Balg außen durch ein Metalldrahtgeflecht 12 umgeben, das bei der Fertigung zwischen Balganschlußenden 3 und Stützhülsen 7 eingefangen und somit eingepreßt ist. Das Geflecht 12 bzw. der daraus gebildete Geflechtsschlauch dient bekannter Maßen der Verhinderung von unliebsamen Längenänderungen des Balges 2 unter mechanischer Beanspruchung. Außerdem dient die Umflechtung 12 dem mechanischem Schutz des Balges 2 vor Schlagbelastungen bzw. Verschmutzung sowie andererseits der Dämpfung von Resonanzschwingungen der Balgwellen.

Wie aus der Zeichnungferner ersichtlich, sind die Endstücke 6 des Metallschlauches 5 nicht nur durch radiales Verpressen aufgeweitet. Vielmehr ist die Ausbildung der Endstücke 6 gleichzeitig in einem Zustand vorgenommen, bei dem die Windungen des Metallschlauches 5 axial zusammengedrückt sind. Auf diese Weise ergibt sich an den Endstücken 6 eine besonders dichte Materialpackung und damit eine hohe Stabilität.

Zur Herstellung der genannten Ausbildung kann der Metallschlauch 5 vor seinem Einsetzen in den Balg 2 bezüglich der Endstücke 6 in gestauchtem Zustand vorgefertigt sein. Andererseits besteht aber grundsätzlich genausogut die Möglichkeit, den Metallschlauch 5 in den Balg 2 einzustecken, um dann sowohl Metallschlauch 5 als auch Balg 2 axial zusammenzudrücken und dann die Aufweitung der Endstücke 6 sowie deren Verpressen mit dem Balganschlußstücken 3 und den Stützringen 7 vorzunehmen.

Schließlich ist noch darauf hinzuweisen, daß die "Anschlagkante" 8 und damit die Länge des Endstückes 6 größer als die axiale Länge der Balganschlußenden 3 sein kann, wie dies in der Zeichnung auf der linken Seite des Metallschlauches 5 ersichtlich ist. Diese Ausbildung führt zu einer besonderen Schonung des benachbarten Endes des Balges 2.

Die Fig. 2 bis 4 zeigen in vergrößerter Form die Einzelheiten II bis IV aus Fig. 1. Dabei lassen die Fig. 3 und 4 erkennen, daß der Balg 2 auch als mehrlagiger Balg ausgebildet sein kann. Soweit ein radialer Abstand zwischen jeweiligem Stützring 7 und Geflechtsschlauch 12 ersichtlich ist, hat dies nur Bedeutung im Rahmen der durch die Zeichnung gegebenen Vereinfachung und soll die Dicke des Geflechtschlauches wiedergeben.

Fig. 2 zeigt noch die Mitte des Metallschlauches, wobei ersichtlich ist, daß der Metallschlauch eine soweit zusammengeschobene Lage im Einbauzustand haben kann, daß er eine erhöhte Bewegungsdämpfung liefert und andererseits auch das Maß der axialen Zusammenschiebbarkeit und damit der axialen Verkürzung des Leitungselementes bestimmen bzw. begrenzen kann.

## Patentansprüche

1. Flexibles Leitungselement (1) für Abgasleitungen von Verbrennungsmotoren bei Kraftfahrzeugen mit einem schraubengangförmig oder ringgewellten Balg (2) aus Metall und einem koaxial in diesem angeordneten, ohne Dichtungseinlage gewickelten Metallschlauch (5), dessen Außenquerschnitt kleiner als der lichte Innenquerschnitt des Balges ist, wobei Balg (2) und Schlauch (5) an ihren jeweils gemeinsamen Enden (3, 6) zu einer Anschlußverbindung für eine weitergehende Rohrleitung vereinigt sind,
dadurch gekennzeichnet,
daß der Balg (2) mit einstückig mit ihm verbundenen zylindrischen Balganschlußenden (3) versehen ist, deren Innendurchmesser kleiner als der lichte Innenquerschnitt des Balges (2) ist und daß der mit seinem Außenquerschnitt im wesentlichen dem Innenquerschnitt der Balganschlußenden (3) entsprechende Metallschlauch (5) an seinen innerhalb der Balganschlußenden gelegenen und mit diesen bündig abschließenden Endstücken (6) unter Zusammendrücken des Schlauchprofils und Ausgleich der Toleranzen gegenüber dem Innenquerschnitt der Balganschlußenden (3) radial aufgeweitet ist.

2. Leitungselement nach Anspruch 1,
dadurch gekennzeichnet,
daß auf die Balganschlußenden (3) je ein zylindrisches Stützteil (7) von außen aufgesetzt, mit dem zugeordneten Balganschlußende (3) sowie Endstück (6) des Metallschlauches (5) radial verpreßt und mit dem Balganschlußende (3) über den Umfang mehrfach durch Anheften verbunden ist.

3. Leitungselement nach Anspruch 2,
dadurch gekennzeichnet,
daß das Stützteil als zylindrischer Stützring (7) ausgebildet ist.

4. Leitungselement nach Anspruch 1 oder 2,
dadurch gekennzeichnet,
daß bei der radialen Verpressung von Balganschlußende (3), Endstück (6) des Metallschlauches (5) und Stützteil (7) zusätzlich eine radiale Querschnittsverminderung des Balganschlußendes (3) und/oder des Stützteiles (6) vorgenommen ist.

5. Leitungselement nach einem der Ansprüche 1 bis 4,
dadurch gekennzeichnet,
daß die Endstücke (6) des Metallschlauches (5) bezüglich deren radialer Aufweitung bei axial gestauchtem Zustand des Metallschlauches (5) vor dessen Einsetzen in den Balg (2) vorgepreßt sind.

6. Leitungselement nach Anspruch 5,
dadurch gekennzeichnet,
daß die vorverpreßten Endstücke (6) des Metallschlauches (5) eine größere axiale Länge als die Balganschlußenden (3) aufweisen.

7. Leitungselement nach einem der vorhergehenden Ansprüche,
dadurch gekennzeichnet,
daß der Übergang zwischen Balg (2) und Balganschlußenden (3) in einer zwischen Außendurchmesser des Balges und Innendurchmesser der Balganschlußenden abgestuften Form (9, 11) ausgebildet ist.

8. Leitungselement nach Anspruch 7,
dadurch gekennzeichnet,
daß der Übergang eine im Außendurchmesser reduzierte, endständige Balgwelle (9) aufweist.

9. Leitungselement nach Anspruch 7 oder 8,
dadurch gekennzeichnet,
daß der Übergang ausgehend von der endständigen Balgwelle (10) eine in Radialrichtung stufenförmige abgesetzte Ausbildung (11) der Balganschlußenden (3) aufweist.

10. Leitungselement nach einem der vorhergehenden Ansprüche,
dadurch gekennzeichnet,
daß der Balg (2) von einem Geflechtsschlauch (12) aus Metalldraht umgeben ist, und daß die Enden des Geflechtsschlauches zwischen Balganschlußenden (3) und Stützteil (7) eingepreßt bzw. durch Punktschweißen festgelegt sind.

## Claims

1. Flexible duct element (1) for motor vehicle internal combustion engine exhaust pipes, having a helically corrugated or ring-corrugated metallic bellows member (2) and a metallic hose (5) that is coiled without a sealing insert, is arranged coaxially in that bellows member (2) and the outside cross-section of which is smaller than the clear inside cross-section of the bellows member, the bellows member (2) and the hose (5) being joined at their common ends (3, 6) to form a connection member for a continuing pipe duct,
characterised in that
the bellows member (2) is provided with cylindrical bellows connection ends (3) that are connected in one piece therewith and the inside diameter of which is smaller than the clear inside cross-section of the bellows member (2), and the metallic hose (5), the outside cross-section of which corresponds substantially to the inside cross-section of the bellows connection ends (3), is radially expanded at its end pieces (6) which are arranged inside the bellows connection ends and terminate flush therewith, with compression of the hose profile and balancing out of the tolerances with respect to the inside cross-section of the bellows connection ends (3).

2. Duct element according to claim 1,
characterised in that
a cylindrical support member (7) is placed from outside on each of the bellows connection ends (3), is compressed radially together with the associated bellows connection end (3) and with the end piece (6) of the metallic hose (5) and is connected to the bellows connection end (3) by fastening at several sites over the circumference.

3. Duct element according to claim 2,
characterised in that
the support member is constructed as a cylindrical support ring (7).

4. Duct element according to claim 1 or claim 2,
characterised in that,
during the radial compression of the bellows connection end (3), of the end piece (6) of the metallic hose (5) and of the support member (7), a radial cross-sectional reduction of the bellows connection end (3) and/or of the support member (7) is additionally effected.

5. Duct element according to any one of claims 1 to 4,
characterised in that
the end pieces (6) of the metallic hose (5) are pre-compressed in respect of their radial expansion when the metallic hose (5) is in the axially compressed state before its insertion into the bellows member (2).

6. Duct element according to claim 5,
characterised in that
the pre-compressed end pieces (6) of the metallic hose (5) have a greater axial length than do the bellows connection ends (3).

7. Duct element according to any one of the preceding claims,
characterised in that
the transition between the bellows member (2) and the bellows connection ends (3) is in a form (9, 11) that is graduated between the outside diameter of the bellows member and the inside diameter of the bellows connection ends.

8. Duct element according to claim 7,
characterised in that
the transition has an end bellows corrugation (9), the outside diameter of which is reduced.

9. Duct element according to claim 7 or claim 8,
characterised in that,
starting from the end bellows corrugation (10), the transition has an extension (11) of the bellows connection ends (3) that is off-set in step-like manner in the radial direction.

10. Duct element according to any one of the preceding claims,
characterised in that
the bellows member (2) is surrounded by a braided hose (12) of metallic wire, and the ends of the braided hose are pressed in or secured by spot welding between the bellows connection ends (3) and the support member (7).

## Revendications

1. Élément de conduite flexible (1) pour des tuyaux d'échappement de moteurs à combustion interne dans des véhicules automobiles, comportant un soufflet de forme hélicoïdale ou de forme annulaire ondulée (2) réalisé en un métal, et un tuyau métallique (5) disposé coaxialement dans ce soufflet et enroulé sans insert d'étanchéité et dont la section transversale est inférieure à la section intérieure de passage libre du soufflet, le soufflet (2) et le tuyau (5) étant réunis, au niveau de leurs extrémités respectives communes (3, 6), pour former une liaison de raccordement pour une conduite tubulaire qui s'étend en aval, caractérisé en ce que le soufflet (2) est équipé d'extrémités cylindriques de raccordement (3), qui sont raccordées d'un seul tenant au soufflet et dont le diamètre intérieur est inférieur à la section transversale de passage libre du soufflet (2), et que le tuyau métallique (5), dont la section transversale extérieure correspond sensiblement à la section transversale intérieure des extrémités de raccordement (3) du soufflet, est élargi radialement au niveau de ses éléments d'extrémité (6), qui sont disposés à l'intérieur des extrémités de raccordement du soufflet et se terminent de niveau avec ces dernières, moyennant une contraction du profil du tuyau et une compensation des tolérances par rapport à la section transversale des extrémités de raccordement (3) du soufflet.

2. Élément de conduite selon la revendication 1, caractérisé en ce que respectivement une partie de support cylindrique (7) est montée de l'extérieur sur les extrémités de raccordement (3) du soufflet, et est comprimée radialement avec l'extrémité de raccordement associée (3) du soufflet ainsi qu'avec un élément d'extrémité (6) du tuyau métallique (5) et est reliée au moyen d'une fixation multiple, à l'extrémité de raccordement (3) du soufflet, sur sa périphérie.

3. Élément de conduite selon la revendication 2, caractérisé en ce que la partie de support est réalisée sous la forme d'un anneau de support cylindrique (7).

4. Élément de conduite selon la revendication 1 ou 2, caractérisé en ce que dans le cas d'une compression radiale de l'extrémité de raccordement (3) du soufflet, de l'élément d'extrémité (6) du tuyau métallique (5) et de la partie de support (7), il se produit en supplément une réduction radiale de la section transversale de l'extrémité de raccordement (3) du soufflet et/ou de la partie de support (6).

5. Élément de conduite selon l'une des revendications 1 à 4, caractérisé en ce que les éléments d'extrémité (6) du tuyau métallique (5) sont précomprimés, par rapport à leur étendue radiale, avant leur insertion dans le soufflet (2), lorsque le tuyau métallique (5) est dans son état comprimé axialement.

6. Élément de conduite selon la revendication 5, caractérisé en ce que les éléments d'extrémité précomprimés (6) du tuyau métallique (5) possèdent une longueur axiale supérieure à celle des extrémités de raccordement (3) du soufflet.

7. Élément de conduite selon l'une des revendications précédentes, caractérisé en ce que la jonction entre le soufflet (2) et les extrémités de raccordement (3) du soufflet sont réalisées avec une forme (9, 11), qui est étagée entre le contour extérieur du soufflet et le contour intérieur des extrémités de raccordement du soufflet.

8. Élément de conduite selon la revendication 7, caractérisé en ce que la jonction possède une ondulation d'extrémité (9) du soufflet, dont le diamètre extérieur est réduit.

9. Élément de conduite selon la revendication 7 ou 8, caractérisé en ce que la jonction possède, à partir de l'ondulation d'extrémité (10) du soufflet, une configuration (11), étagée dans la direction radiale, des extrémités de raccordement (3) du soufflet.

10. Élément de conduite selon l'une des revendications précédentes, caractérisé en ce que le soufflet (2) est entouré par un tuyau (12) formé d'un treillis de fils
